# EUROPEAN PATENT SPECIFICATION

(11) **EP 2 514 509 B1**
(45) Date of publication and mention of the grant of the patent: **30.03.2016**
(21) Application number: 12164508.9
(22) Date of filing: 17.04.2012
(51) Int. Cl.: B01D 53/14, B01D 53/62

(54) **Amine capturing system and carbon dioxide capturing system**
Aminabscheidungssystem und Kohlendioxidabscheidungssystem
Système de capture d'amine et système de capture de dioxyde de carbone

(30) Priority: 18.04.2011 JP 2011091768
(43) Date of publication of application: 24.10.2012
(73) Proprietor: Kabushiki Kaisha Toshiba, Tokyo 105-8001 (JP)
(72) Inventor: Fujita, Koshito, Minato-ku, Tokyo 105-8001 (JP); Ogawa, Takashi, Minato-ku, Tokyo 105-8001 (JP); Hodotsuka, Masatoshi, Minato-ku, Tokyo 105-8001 (JP)
(74) Representative: Moreland, David

(56) References cited:
- WO-A1-2010/102877
- US-A1- 2003 045 756

## Description

### FIELD

Embodiments described herein relate to an amine capturing system and a carbon dioxide capturing system.

### BACKGROUND

In recent years, importance of a problem of global warming has become increase due to the greenhouse effect of carbon dioxide (CO₂) that is a combustion product of a fossil fuel. In the Kyoto Protocol to the United Nations Framework Convention on Climate Change, Japan's goal in reducing the greenhouse effect gas emissions is to attain 6% reduction between 2008 and 2012 compared to 1990.

With such a background studies are energetically made regarding a method of separating and capturing carbon dioxide in a combustion exhaust gas by bringing the combustion exhaust gas in contact with an amine-containing absorbing solution, and a method of storing the captured carbon dioxide without emitting the carbon dioxide to the atmosphere, with regard to a thermal power station and the like which use a large amount of fossil fuels.

Specifically, a carbon dioxide capturing system is known which includes an absorption tower configured to cause an absorbing solution to absorb the carbon dioxide contained in the combustion exhaust gas, and a regeneration tower supplied with the absorbing solution (rich solution) containing the absorbed carbon dioxide from the absorption tower and configured to heat the absorbing solution to release a carbon dioxide gas and regenerate the absorbing solution. A reboiler for supplying a heat source is connected to the regeneration tower. The system is configured so that the absorbing solution (lean solution) which has been regenerated in the regeneration tower is supplied to the absorption tower and circulates in this system.

US 2003/045756 discloses in Fig. 1 an example of an amine recovery apparatus comprising:a carbon dioxide capturing module configured to bring a gas containing carbon dioxide in contact with an absorbing solution containing amine to cause the absorbing solution to absorb the carbon dioxide;a first cleaning apparatus configured to clean the gas exhausted from the carbon dioxide capturing module with a cleaning liquid to capture the amine entrained by the gas;a second cleaning apparatus configured to clean the gas exhausted from the first cleaning apparatus with a cleaning liquid to capture the amine entrained by the gas;a liquid sending mechanism configured to extract the cleaning liquid used in the second cleaning apparatus and send the cleaning liquid to the first cleaning apparatus; an absorbing solution demister configured to capture mist of the absorbing solution entrained by the gas exhausted from the carbon dioxide capturing module; and a cleaning liquid demister configured to capture mist of the cleaning liquid entrained by the gas exhausted from the first cleaning apparatus.

US 2003/045756 further discloses on paragraph 0081 an amine concentration in a decarbonated exhaust gas released from an absorption tower 61 to the outside of the system.

WO 2010/102877 discloses on page 15, lines 7 to 16 an ion exchanger dialysis applied to amine recovery.

### BRIEF DESCRIPTION OF THE DRAWINGS

FIG. 1 is a diagram illustrating a configuration of a carbon dioxide capturing system of a first embodiment;
FIG. 2 is a diagram illustrating a configuration of an amine capturing system of a first embodiment;
FIG. 3 is a diagram illustrating a configuration of an amine capturing system of a second embodiment;
FIG. 4 is a diagram illustrating a configuration of an amine capturing system of a third embodiment;
FIG. 5 is a diagram illustrating a configuration of an amine capturing system of a fourth embodiment (not according to the invention); and
FIG. 6 is a diagram illustrating a configuration of an amine capturing system of a sixth embodiment (not according to the intention).

### DETAILED DESCRIPTION

Embodiments will now be explained with reference to the accompanying drawings.

In a process of separating and capturing the carbon dioxide with the amine-containing absorbing solution, the amine is entrained by the combustion exhaust gas from which the carbon dioxide has been removed (referred to as "treated gas"), and is scattered in the atmosphere.

An object of the disclosure is therefore to provide an amine capturing system which can reduce the amine that is scattered in the atmosphere and can efficiently capture and recycle the amine entrained by the treated gas, and to provide a carbon dioxide capturing system include such an amine capturing system.

An embodiment described herein is an amine capturing system including a carbon dioxide capturing module configured to bring a gas containing carbon dioxide in contact with an absorbing solution containing amine to cause the absorbing solution to absorb the carbon dioxide. The system further includes a first cleaning apparatus configured to clean the gas exhausted from the carbon dioxide capturing module with a cleaning liquid to capture the amine entrained by the gas, and a second cleaning apparatus configured to clean the gas exhausted from the first cleaning apparatus with a cleaning liquid to capture the amine entrained by the gas. The system further includes a second measuring instrument configured to measure a concentration of the amine in the cleaning liquid used in the second cleaning apparatus, and a liquid sending mechanism configured to extract the cleaning liquid used in the second 3454891-1-rgranlee cleaning apparatus and send the cleaning liquid to the first cleaning apparatus when the concentration of the amine detected by the second measuring instrument exceeds a predetermined value. The system further includes an absorbing solution demister configured to capture mist of the absorbing solution entrained by the gas exhausted from the carbon dioxide capturing module, and a cleaning liquid demister configured to capture mist of the cleaning liquid entrained by the gas exhausted from the first cleaning apparatus.

### (First Embodiment)

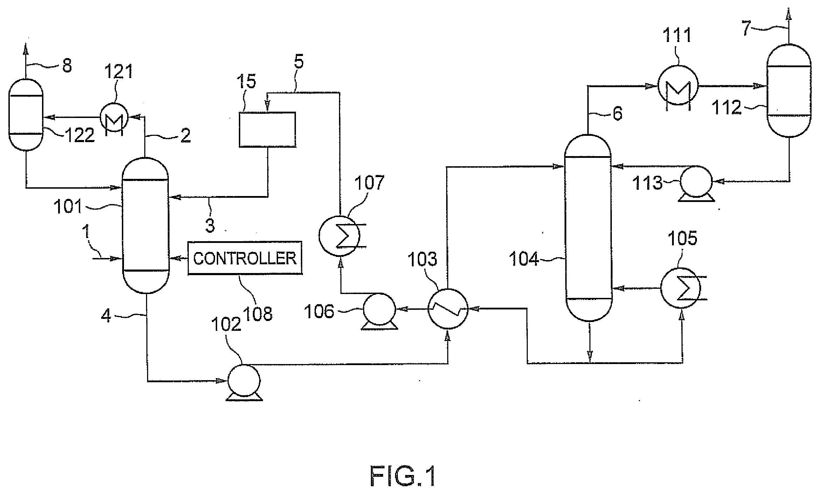

FIG. 1 is a diagram illustrating a configuration of a carbon dioxide capturing system of a first embodiment.

The carbon dioxide capturing system in FIG. 1 includes an absorption tower 101, a rich solution pump 102, a regenerative heat exchanger 103, a regeneration tower 104, a reboiler 105, a lean solution pump 106, a cooler 107 and a controller 108.

A combustion exhaust gas 1 containing carbon dioxide is supplied into the absorption tower 101. The absorption tower 101 is configured to bring the combustion exhaust gas 1 into contact with an absorbing solution to cause the absorbing solution to absorb the carbon dioxide in the combustion exhaust gas 1. In the present embodiment, an amine-containing absorbing solution containing amine is used as the absorbing solution.

The absorption tower 101 exhausts a combustion exhaust gas 2 from which the carbon dioxide has been removed (treated gas) from the top, and exhausts the absorbing solution (rich solution) which has absorbed carbon dioxide from the bottom. In FIG. 1, this absorbing solution is denoted by reference numeral 4. The absorbing solution 4 is transported by the rich solution transferring pump 102 through the regenerative heat exchanger 103, and is supplied into the regeneration tower 104.

The regeneration tower 104 is configured to cause this absorbing solution to release the carbon dioxide. The regeneration tower 104 exhausts a carbon dioxide gas 6 which has been released from the absorbing solution from the top, and exhausts an absorbing solution (lean solution) which has released the carbon dioxide from the bottom. In FIG. 1, this absorbing solution is denoted by reference numeral 5.

The absorbing solution which has been exhausted from the regeneration tower 104 is supplied into the reboiler 105. The reboiler 105 causes the absorbing solution to release a vapor and a carbon dioxide gas by heating the absorbing solution. These gases are supplied into the regeneration tower 104 again. Then, the absorbing solution releases carbon dioxide by being heated by the heat of these gases, as described above.

The absorbing solution 5 which has been exhausted from the regeneration tower 104 is transported by the lean solution transferring pump 106 through the regenerative heat exchanger 103 and the cooler 107, and is stored in an absorbing solution buffer tank 15. Then, the absorbing solution (lean solution) which has been exhausted from the absorbing solution buffer tank 15 is supplied into the absorption tower 101. In FIG. 1, this absorbing solution is denoted by reference numeral 3.

The carbon dioxide capturing system in FIG. 1 further includes a regeneration tower reflux condenser 111, a carbon dioxide separator 112, a reflux liquid pump 113, an absorption tower reflux condenser 121 and a vapor-liquid separator 122.

A carbon dioxide gas 6 which is exhausted from the regeneration tower 104 contains a vapor that has evaporated from the absorbing solution. This vapor is condensed and is converted into water by being cooled by the regeneration tower reflux condenser 111. The carbon dioxide separator 112 separates the carbon dioxide gas and the condensed water from each other, and emits the separated carbon dioxide gas to the outside. In FIG. 1, this carbon dioxide gas is denoted by reference numeral 7. On the other hand, the condensed water is returned to the regeneration tower 104 by the reflux liquid pump 113.

Similarly, the treated gas 2 which is exhausted from the absorption tower 101 also contains a vapor which has evaporated from the absorbing solution. This vapor is condensed and is converted into water by being cooled by the absorption tower reflux condenser 121. The vapor-liquid separator 122 separates the treated gas and the condensed water from each other, and emits the separated treated gas to the outside. In FIG. 1, this treated gas is denoted by reference numeral 8. On the other hand, the condensed water is returned to the absorption tower 101.

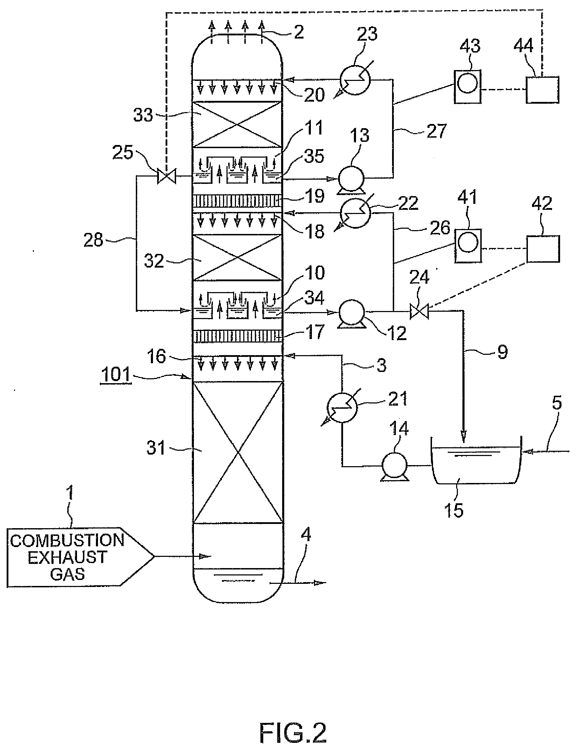

The carbon dioxide capturing system in FIG. 1 further includes an amine capturing system which captures amine that is entrained by the treated gas. This amine capturing system will be described in detail below with reference to FIG. 2.

FIG. 2 is a diagram illustrating a configuration of an amine capturing system of a first embodiment.

The amine capturing system of the present embodiment is provided with the absorption tower 101, the absorbing solution buffer tank 15 and other components illustrated in FIG. 2.

The absorption tower 101 includes a carbon dioxide capturing module 31, a first cleaning apparatus which includes a first amine capturing module 32 and a first liquid pool 34, and a second cleaning apparatus which includes a second amine capturing module 33 and a second liquid pool 35, as is illustrated in FIG. 2.

The carbon dioxide capturing module 31 is configured to bring the combustion exhaust gas 1 in contact with the absorbing solution, and thereby cause the absorbing solution to absorb the carbon dioxide in the combustion exhaust gas 1. Specifically, the absorbing solution (lean solution) 3 which is dispersedly falls from an absorbing solution distributor 16 comes in contact with the combustion exhaust gas 1 which rises in the carbon dioxide capturing module 31, and thereby the absorbing solution 3 absorbs the carbon dioxide. The absorbing solution 3 which has absorbed the carbon dioxide is accumulated in the bottom of the absorption tower 101, and is exhausted as the rich solution 4.

The treated gas in which the carbon dioxide has been removed in the carbon dioxide capturing module 31 rises through an absorbing solution demister 17, and flows into the first cleaning apparatus that is positioned in the upper part of the carbon dioxide capturing module 31. In FIG. 2, this treated gas is denoted by reference numeral 10.

The first amine capturing module 32 is configured to clean the treated gas 10 with a cleaning liquid and thereby capture the amine entrained by the treated gas 10. Specifically, the cleaning liquid which dispersedly falls from a first cleaning liquid distributor 18 comes in contact with the treated gas 10 which rises in the first amine capturing module 32, and thereby the cleaning liquid absorbs the amine. The cleaning liquid which has absorbed the amine is accumulated in the first liquid pool 34.

The treated gas in which the amine has been captured in the first amine capturing module 32 rises through a cleaning liquid demister 19, and flows into the second cleaning apparatus that is positioned in the upper part of the first amine capturing module 32. In FIG. 2, this treated gas is denoted by reference numeral 11.

The second amine capturing module 33 is configured to clean the treated gas 11 with the cleaning liquid and thereby capture the amine entrained by the treated gas 11. Specifically, the cleaning liquid which dispersedly falls from a second cleaning liquid distributor 20 comes in contact with the treated gas 11 that rises in the second amine capturing module 33, and thereby the cleaning liquid absorbs the amine. The cleaning liquid which has absorbed the amine is accumulated in the second liquid pool 35.

The treated gas in which the amine has been captured in the second amine capturing module 32 rises in the absorption tower 101, and is exhausted from the top of the absorption tower 101. In FIG. 2, this treated gas is denoted by reference numeral 2.

As described above, the absorption tower 101 has cleaning apparatuses of two stages. An advantage of the cleaning apparatuses having the two-stage structure will be described later.

The amine capturing system in FIG. 2 further includes a first cleaning liquid pump 12, a second cleaning liquid pump 13, and an absorbing solution pump 14.

The first cleaning liquid pump 12 is a pump which sends a cleaning liquid accumulated in the first liquid pool 34 to the first cleaning liquid distributor 18 again through a first cleaning liquid circulating line 26. Similarly, the second cleaning liquid pump 13 is a pump which sends a cleaning liquid accumulated in the second liquid pool 35 to the second cleaning liquid distributor 20 again through a second cleaning liquid circulating line 27.

As described above, these cleaning liquids are circulated and used in the first and second cleaning apparatuses, respectively. At this time, these cleaning liquids are cooled to predetermined temperatures in the first and second cleaning liquid coolers 22 and 23, respectively.

The absorbing solution pump 14 is a pump which sends an absorbing solution 3 from an absorbing solution buffer tank 15 to the absorbing solution distributor 16. At this time, the absorbing solution 3 is cooled to a predetermined temperature in the absorbing solution cooler 21.

The amine capturing system in FIG. 2 further includes a first measuring instrument 41, a first calculator 42, a second measuring instrument 43 and a second calculator 44.

The second measuring instrument 43 is a measuring instrument which measures the concentration of the amine in the cleaning liquid used in the second cleaning apparatus. Specifically, the second measuring instrument 43 measures the concentration of the amine in the cleaning liquid flowing in a second cleaning liquid circulating line 27.

In the present system, when the second measuring instrument 43 has detected that a concentration of the amine is equal to or higher than a predetermined value, a second valve 25 is set at an opened state under the control of the second calculator 44. The second valve 25 is provided on a cleaning liquid bypass line 28 which connects the second liquid pool 35 and the first liquid pool 34 to each other. Accordingly, when the second valve 25 is set at the opened state, the cleaning liquid in the second liquid pool 35 is extracted, and is sent to the first liquid pool 34. The second calculator 44, the second valve 25 and the cleaning liquid bypass line 28 are examples of a liquid sending mechanism of the present embodiment.

The first measuring instrument 41 is a measuring instrument which measures the concentration of the amine in the cleaning liquid used in the first cleaning apparatus. Specifically, the first measuring instrument 41 measures the concentration of the amine in the cleaning liquid flowing in the first cleaning liquid circulating line 26.

In the present system, when the first measuring instrument 41 has detected that the concentration of the amine is equal to or higher than a predetermined value, a first valve 24 is set at an opened state under the control of the first calculator 42. The first valve 24 is provided on a bypass line which connects the first cleaning liquid circulating line 26 and the absorbing solution buffer tank 15 to each other. Accordingly, when the first valve 24 is set at the opened state, the cleaning liquid which circulates in the first cleaning apparatus is extracted, and is mixed into the absorbing solution stored in the absorbing solution buffer tank 15.

As described above, in the present system, the cleaning liquid which has been extracted from the first cleaning apparatus is recycled as the absorbing solution. This is based on such a knowledge that the cleaning liquid in the first cleaning apparatus can be recycled as an absorbing solution, because of containing the amine which has been captured from the treated gas, in a high concentration. In FIG. 2, the cleaning liquid which has been extracted from the first cleaning apparatus is denoted by reference numeral 9. The first calculator 42, the first valve 24 and the bypass line for sending the cleaning liquid 9 are examples of a mixing mechanism of the present embodiment.

The amine capturing system in FIG. 2 further includes an absorbing solution demister 17 and a cleaning liquid demister 19.

The absorbing solution demister 17 is provided in the outlet of the carbon dioxide capturing module 31. The treated gas 10 in which the carbon dioxide has been removed in the carbon dioxide capturing module 31 rises through the absorbing solution demister 17. At this time, the absorbing solution demister 17 captures and collects the mist of the absorbing solution, which is entrained by the treated gas 10.

In addition, the cleaning liquid demister 19 is provided in the outlet of the first cleaning apparatus. The treated gas 11 in which the carbon dioxide has been removed in the first cleaning apparatus rises through the cleaning liquid demister 19. At this time, the cleaning liquid demister 19 captures and collects the mist of the cleaning liquid, which is entrained by the treated gas 11.

### (1) Details of operation of amine capturing system

Next, details of an operation of the amine capturing system in FIG. 2 will be described below. Specifically, details of operations of the first measuring instrument 41, the first calculator 42, the second measuring instrument 43, the second calculator 44 and the like will be described below.

In the amine entrained by the treated gas, generally, there exist a high-volatility amine which has high volatility (in other words, high vapor pressure) and is easily released from the liquid, and a low-volatility amine which has low volatility (in other words, low vapor pressure) and resists being released from the liquid.

The low-volatility amine is mainly amine immediately after having started being used. In addition, the high-volatility amine is mainly amine which has deteriorated by being used. In most cases, amine having a vapor pressure of 100 Pa or less at room temperature corresponds to the low-volatility amine, and amine having a vapor pressure of 100 Pa or more at room temperature corresponds to the high-volatility amine.

When the amine is captured, as the amine becomes highly volatile, a cleaning liquid having a low concentration of the amine needs to be used, in order to have an enhanced amine-capturing power. On the other hand, from the viewpoint of keeping the performance of the absorbing solution which captures carbon dioxide, it is important to efficiently capture/recycle the low-volatility amine rather than the high-volatility amine. The present inventors have focused on this point, and have devised a technique of suppressing the scattering of the high-volatility amine into the atmosphere, which is easily scattered into the atmosphere, and efficiently capturing/recycling the low-volatility amine entrained by the treated gas.

The present system has the cleaning apparatuses of a two-stage structure, and monitors (measures) the concentration of the amine in the cleaning liquid in each stage. The concentration of the amine can be measured, for example, from the density, the pH, the electroconductivity, the ultrasound velocity, the oxidation-reduction potential (ORP) and the like of the cleaning liquid.

First, an operation of the second cleaning apparatus will be described below.

When the second measuring instrument 43 has detected that the concentration of the amine is equal to or higher than a predetermined value, the second cleaning apparatus sends a cleaning liquid in the second liquid pool 35 to the first liquid pool 34. Then, a new cleaning liquid having a low concentration of the amine is supplemented into the second liquid pool 35. In the above way, the second cleaning apparatus controls the concentration of the amine in the cleaning liquid used in the second cleaning apparatus, to a low concentration. Thereby, the second cleaning apparatus enhances the amine-capturing power of the cleaning liquid used in the second cleaning apparatus, and suppresses the scattering of the amine entrained by the treated gas 2 exhausted from the absorption tower 101, into the atmosphere.

In the second cleaning apparatus, the cleaning liquid contains a lot of high-volatility amine. This is because the high-volatility amine is easily released from the liquid, and is easily entrained by the treated gas in the carbon dioxide capturing module 31 and the first cleaning apparatus. On the other hand, because the second cleaning apparatus is a cleaning apparatus in the final stage, if the second cleaning apparatus does not capture the high-volatility amine, the high-volatility amine is scattered into the atmosphere. Then, as was described above, the present system controls the concentration of the amine in the second cleaning apparatus, to the low concentration, thereby enhances an amine-capturing power of the cleaning liquid, and suppresses the scattering of the high-volatility amine into the atmosphere.

In addition, the present system has the absorbing solution demister 17 provided in the outlet of the carbon dioxide capturing module 31, and has the cleaning liquid demister 19 provided in the outlet of the first cleaning apparatus. These demisters 17 and 19 capture and collect the mist of the absorbing solution and the mist of the cleaning liquid, which are entrained by the treated gas, and suppress the scattering of the amine into the atmosphere due to the entrainment.

Next, an operation of the first cleaning apparatus will be described below.

In the first cleaning apparatus, the cleaning liquid is recycled as the absorbing solution. In order to recycle the cleaning liquid as the absorbing solution, it is important to approach the concentration of the amine in the cleaning liquid to the concentration of the amine in the absorbing solution as much as possible, from the viewpoint of keeping the concentration of the amine in the absorbing solution.

Then, when the first measuring instrument 41 has detected that the concentration of the amine is equal to or higher than a predetermined value, the first cleaning apparatus sends a cleaning liquid flowing in the first cleaning liquid circulating line 26 to the absorbing solution buffer tank 15. Thereby, it is possible to recycle the cleaning liquid containing a high concentration of the amine as the absorbing solution. Then, a new cleaning liquid containing a low concentration of the amine or the cleaning liquid sent from the second liquid pool 35 is supplemented into the first liquid pool 34.

Because the first cleaning apparatus is a cleaning apparatus in the lowermost stage, the concentration of the amine in the cleaning liquid becomes higher than that of the second cleaning apparatus which is a cleaning apparatus in the uppermost stage. In addition, the cleaning liquid in the first cleaning apparatus contains a lot of low-volatility amine. This is because the low-volatility amine resists being released from the liquid, and resists being entrained by the treated gas and going out to the second cleaning apparatus, compared to the high-volatility amine. For this reason, the cleaning liquid in the first cleaning apparatus contains a high concentration of the amine and contains a lot of the low-volatility amine which has a high performance of capturing carbon dioxide.

Then, in the present system, the cleaning liquid in the first cleaning apparatus out of the cleaning liquids in the first and the second cleaning apparatuses is reused as the absorbing solution. Thereby, it is possible to efficiently capture/recycle the amine which is entrained by the treated gas. This is because the cleaning liquid which has captured a lot of the low-volatility amine is recycled as the absorbing solution.

When the first measuring instrument 41 has detected that the concentration of the amine is equal to or higher than a predetermined value, the calculator 42 determines the timing at which the cleaning liquid in the first cleaning apparatus is sent to the absorbing solution buffer tank 15. Similarly, when the second measuring instrument 43 has detected that a concentration of the amine is equal to or higher than a predetermined value, the calculator 44 determines the timing at which the cleaning liquid in the second cleaning apparatus is sent to the first cleaning apparatus.

In addition, in the present system, the cleaning liquid in the second liquid pool 35 is sent to the first liquid pool 34, and accordingly a cleaning liquid containing a high concentration of the amine and having a low amine-capturing power results in being supplied to the first cleaning apparatus. However, in the present system, the second cleaning apparatus works so as to efficiently capture the high-volatility amine, accordingly the first cleaning apparatus does not need to efficiently capture the high-volatility amine, and can show its necessary function even with the cleaning liquid containing a high concentration of the amine. It is rather desirable in the present system that the cleaning liquid in the first cleaning apparatus contains a high concentration of the amine, in order to reuse the cleaning liquid in the first cleaning apparatus as the absorbing solution. Because of this, in the present system, the cleaning liquid used in the second cleaning apparatus is supplied to the first cleaning apparatus.

### (2) Details of operating condition of amine capturing system

Next, details of operating conditions of the amine capturing system in FIG. 2 such as a predetermined value for the concentration of the amine in the cleaning liquid and types of the absorbing solution and the cleaning liquid will be described below.

The first and second calculators 42 and 44 compare the measurement value of the concentration of the amine in the cleaning liquid to the predetermined value, but these predetermined values may be set at desirable values according to the concentration of the amine in the absorbing solution and the type of the amine to be captured.

The predetermined value in the second calculator 44, for example, is set at a value capable of achieving such a policy as to control the amount of the amine contained in the treated gas 2 to a predetermined amount or less (for example, 1 ppm or less), based on the policy. In addition, the predetermined value in the first calculator 42 is set at a concentration value of X% (for example, 50%) of the concentration of the amine in the absorbing solution so that the concentration of the amine in the cleaning liquid approaches the concentration of the amine in the absorbing solution as much as possible.

When the above described value of X% is a value which is greatly far from 100%, the concentration of the amine in the absorbing solution is lowered by the mixing of the cleaning liquid. This problem can be solved, for example, by limiting an amount of a condensed water to be returned to the absorption tower 101 and the regeneration tower 104, out of condensed water which has been generated in the carbon dioxide separator 112 and the vapor-liquid separator 122 (see FIG. 1).

Examples of the amine (amine compound) contained in the absorbing solution include the following amine. The examples include, for example, "primary amine containing an alcoholic hydroxy group" such as monoethanolamine and 2-amino-2-methyl-1-propanol; "secondary amine containing an alcoholic hydroxy group" such as diethanolamine and 2-methylaminoethanol; and "tertiary amine containing an alcoholic hydroxy group" such as triethanolamine and N-methyldiethanolamine. The examples further include: "polyethylene polyamine" such as ethylenediamine, triethylenediamine and diethylenetriamine; "cyclic amine" such as piperazines, piperidines and pyrrolidines; "polyamine" such as xylylene diamine; and "amino acids" such as methylaminocarboxylic acid. The examples further include a mixture of these amine compounds.

In addition, examples of the absorbing solution include an aqueous solution containing 10 to 70 wt% of the amine. Furthermore, the absorbing solution may contain also a carbon dioxide absorption promoter, a corrosion inhibitor and other media (for example, methanol, polyethylene glycol and sulfolane).

In addition, examples of the cleaning liquid include water (for example, pure water). Examples of the cleaning liquid other than the water will be described later.

### (3) Effect of first embodiment

Finally, an effect of the first embodiment will be described below.

As described above, in the present embodiment, the cleaning apparatuses have a two-stage structure, and measure the concentration of the amine in the cleaning liquid of each stage. Then, when the second measuring instrument 43 has detected that the concentration of the amine is equal to or higher than a predetermined value, the second cleaning apparatus sends the cleaning liquid in the second liquid pool 35 to the first liquid pool 34. In addition, when the first measuring instrument 41 has detected that the concentration of the amine is equal to or higher than a predetermined value, the first cleaning apparatus sends the cleaning liquid flowing in the first cleaning liquid circulating line 26 to the absorbing solution buffer tank 15.

Thereby, in the present embodiment, the second cleaning apparatus is capable of suppressing the scattering of the amine into the atmosphere, and the first cleaning apparatus is capable of efficiently capturing/recycling the amine entrained by the treated gas. Specifically, the second cleaning apparatus is capable of suppressing the scattering of the high-volatility amine into the atmosphere, which is easily scattered into the atmosphere, and the first cleaning apparatus is capable of efficiently capturinglrecycling the low-volatility amine having a high performance of capturing carbon dioxide.

In addition, in the present embodiment, the absorbing solution demister 17 is provided in the outlet of the carbon dioxide capturing module 31, and the cleaning liquid demister 19 is provided in the outlet of the first cleaning apparatus. Thereby, it is possible in the present embodiment to suppress the scattering of the mist of the absorbing solution and the mist of the cleaning liquid which is entrained by the treated gas into the atmosphere due to the entrainment, and it is possible to further enhance an effect of suppressing the scattering of the amine into the atmosphere.

In the present embodiment, one or more cleaning apparatuses (referred to as "middle cleaning apparatus") may be further provided between the first cleaning apparatus and the second cleaning apparatus. In other words, the cleaning apparatuses may also have an N-stage structure (N is an integer of 3 or more). The middle cleaning apparatus has the same structure as those of the first cleaning apparatus and the second cleaning apparatus, and captures the amine entrained by the treated gas, by cleaning the treated gas with the cleaning liquid. In this case, it is desirable to provide a cleaning liquid demister between the first cleaning apparatus and the middle cleaning apparatus, between the second cleaning apparatus and the middle cleaning apparatus and between the middle cleaning apparatuses.

The middle cleaning apparatus is used, for example, for the purpose of gradually increasing the concentration of the amine in the cleaning liquid, from the second cleaning apparatus to the first cleaning apparatus. The specific example includes controlling the concentration of the amine in the middle cleaning apparatus to a value higher than that in the second cleaning apparatus, and controlling the concentration of the amine in the first cleaning apparatus to a value higher than that in the middle cleaning apparatus. In this case, the cleaning liquid bypass line 28 is provided between mutually adjacent cleaning apparatuses (between the first cleaning apparatus and the middle cleaning apparatus, between the second cleaning apparatus and the middle cleaning apparatus and between the middle cleaning apparatuses). In addition, in this case, it is desirable to provide the measuring instrument and the calculator also in the middle cleaning apparatus.

Second to six embodiments which are modified examples of the first embodiment will be described below. The second to six embodiments will be described mainly on each point which is different from that in the first embodiment.

### (Second Embodiment)

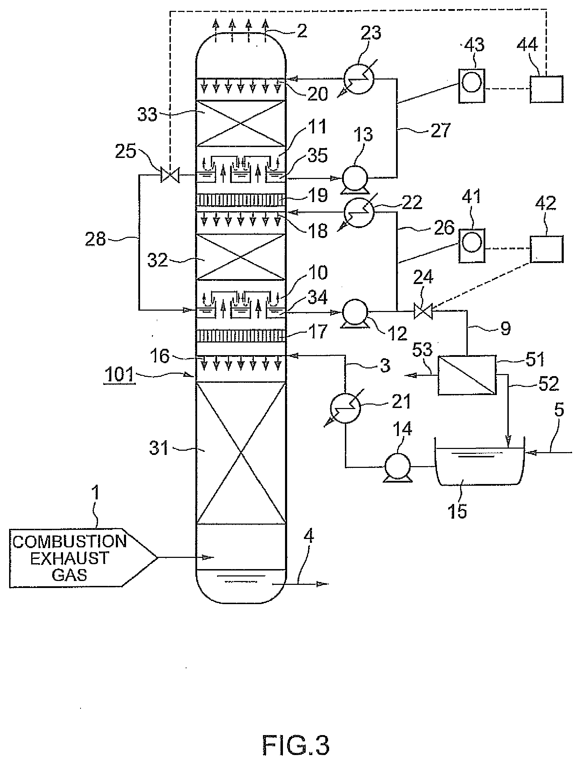

FIG. 3 is a diagram illustrating a configuration of an amine capturing system of a second embodiment.

The amine capturing system in FIG. 3 includes a reverse osmosis membrane module 51 in addition to components illustrated in FIG. 2.

The present system causes the cleaning liquid 9 extracted from the first cleaning apparatus to flow into the reverse osmosis membrane 51, and causes an concentration of the amine in the cleaning liquid 9 to be concentrated by the reverse osmosis membrane 51. In FIG. 3, the cleaning liquid (concentrated cleaning liquid) which has been concentrated by the reverse osmosis membrane 51 is denoted by reference numeral 52. Furthermore, in FIG. 3, a cleaning liquid (permeated cleaning liquid) which has permeated the reverse osmosis membrane 51 and from which the amine has been removed is denoted by reference numeral 53.

Then, the present system mixes the concentrated cleaning liquid 52 into an absorbing solution which is stored in an absorbing solution buffer tank 15. Thereby, it is possible in the present embodiment to recycle the cleaning liquid having a higher concentration of the amine than that in the first embodiment, as the absorbing solution. The concentrated cleaning liquid 52 is preferably concentrated to the concentration of the amine in the absorbing solution, by the reverse osmosis membrane 51.

In addition, when a combustion exhaust gas 1 contains much moisture, the amount of moisture carried into a carbon dioxide capturing module 31 increases, and thereby it is assumed that the concentration of the amine in the absorbing solution is more diluted than a required amount. In this case, it is desirable to control the concentration of the amine in the concentrated cleaning liquid 52 so as to be higher than the concentration of the amine in the absorbing solution. Thereby, it is possible to return the concentration of the amine in the absorbing solution to the predetermined value.

For example, the permeated cleaning liquid 53 from which the amine has been removed can be recycled as the cleaning liquid for the first and the second cleaning apparatuses.

As described above, according to the present embodiment, it is possible to recycle the cleaning liquid having a higher concentration of the amine than that of the first embodiment, as the absorbing solution.

### (Third Embodiment)

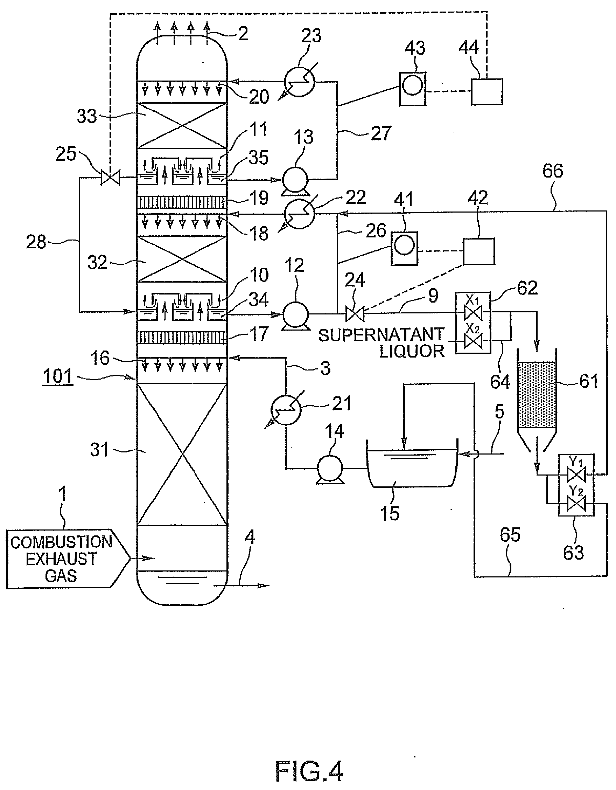

FIG. 4 is a diagram illustrating a configuration of an amine capturing system of a third embodiment.

The amine capturing system in FIG. 4 includes a cation exchange resin 61, a first switching valve 62, and a second switching valve 63 in addition to the components illustrated in FIG. 2.

When opening a first valve 24 and extracting the cleaning liquid 9 from the first cleaning apparatus, the present system sets the first switching valve 62 to the position of "X₁" and sets the second switching valve 63 to the position of "Y₁". Thereby, the present system causes the cleaning liquid 9 to flow into the cation exchange resin 61, and causes the amine in the cleaning liquid 9 to be adsorbed by the cation exchange resin 61. The cleaning liquid (passed cleaning liquid) 66 which has passed through the cation exchange resin 61 and has made the amine removed is returned to a first cleaning liquid circulating line 26, and is recycled as illustrated in FIG. 4.

Next, after a sufficient amount of the amine has been adsorbed by the cation exchange resin 61, the present system closes the first valve 24, sets the first switching valve 62 to the position of "X₂", and also sets the second switching valve 63 to the position of "Y₂". Thereby, the present system causes a supernatant liquor 64 to flow into the cation exchange resin 61, and causes the amine which has been adsorbed by the cation exchange resin 61 to elute into the supernatant liquor 64. The supernatant liquor 65 which has passed through the cation exchange resin 61 becomes a concentrated supernatant liquor in which the concentration of the amine is concentrated.

Then, the present system mixes the concentrated supernatant liquor 65 into the absorbing solution stored in the absorbing solution buffer tank 15. Thereby, it is possible in the present embodiment to recycle the concentrated supernatant liquor 65 in which the concentration of the amine is concentrated, as the absorbing solution. The concentrated supernatant liquor 65 is preferably concentrated to the concentration of the amine in the absorbing solution.

It is common to use a strong acid such as sulfuric acid and nitric acid as the supernatant liquor for causing the amine to be desorbed, but in the present embodiment, a weakly-basic aqueous solution is used as the supernatant liquor 64. The reason is because it is not desirable to use the strong acid, because the supernatant liquor 64 is recycled as the absorbing solution for absorbing the amine, in the present embodiment.

In the present embodiment, for example, a weakly-basic aqueous solution of which the ion selectivity is stronger than that of the amine is used as the supernatant liquor 64. Thereby, it is possible to cause the amine to be desorbed while suppressing the deterioration of the amine. Examples of such a supernatant liquor 64 include ammonia water.

According to an experiment, it was confirmed that 90% or more of the amine which was adsorbed by the cation exchange resin 61 was desorbed when 5% ammonia water was used as the supernatant liquor 64. In addition, it was confirmed that almost 100% of the amine in the cleaning liquid 9 was adsorbed by the cation exchange resin 61 when a spherical styrene divinylbenzene polymer (Bond Elut Plexa PCX made by VARIAN, INC.) was used as the cation exchange resin 61.

As described above, it is possible according to the present embodiment to recycle the concentrated supernatant liquor in which the concentration of the amine has been concentrated, as the absorbing solution.

### (Fourth Embodiment)

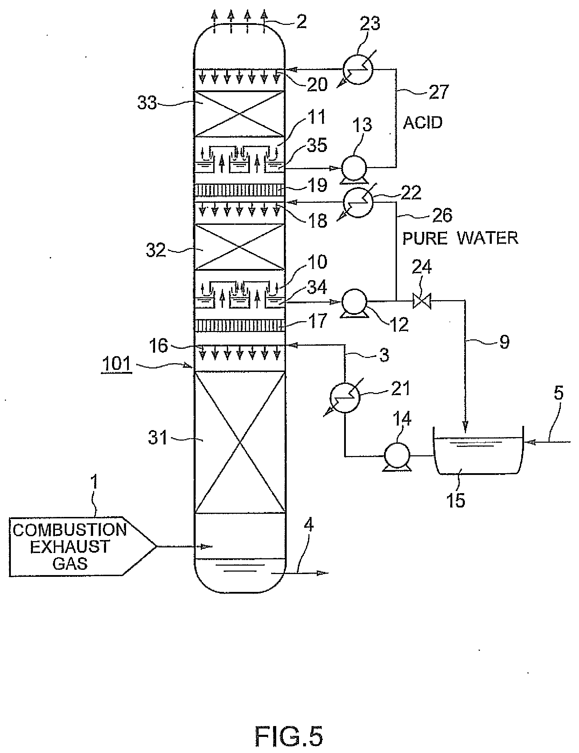

FIG. 5 is a diagram illustrating a configuration of an amine capturing system of a fourth embodiment.

In the amine capturing system in FIG. 5, the controller 108 (FIG. 1) controls the pH of the cleaning liquid used in the second cleaning apparatus so as to be lower than the pH of the cleaning liquid used in the first cleaning apparatus.

As described above, in the amine entrained by the treated gas, a high-volatility amine and a low-volatility amine are mixed. However, the high-volatility amine resists being captured by the cleaning liquid, and accordingly as the cleaning apparatus approaches a later stage, a rate of the high-volatility amine occupying the above described amine increases. Because of this, as the cleaning apparatus approaches the later stage, the cleaning liquid having a larger amine-capturing power is needed.

Then, in the present embodiment, the present system is operated in the form of controlling a pH of the cleaning liquid in a second cleaning apparatus so as to be lower than a pH of the cleaning liquid in a first cleaning apparatus, in order to control the amine-capturing power of the cleaning liquid in the second cleaning apparatus so as to be larger than that of the cleaning liquid in the first cleaning apparatus.

In the present embodiment, water (for example, pure water) is used as the cleaning liquid in the first cleaning apparatus. On the other hand, an acidic aqueous solution is used as the cleaning liquid in the second cleaning apparatus. Examples of an acid charged into the acidic aqueous solution include nitric acid, sulfuric acid, phosphoric acid and acetic acid.

The cleaning liquid into which these acids have been charged is not recycled as the absorbing solution, and accordingly is used so as not to come in contact with the cleaning liquid in the first cleaning apparatus.

As described above, according to the present embodiment, it is possible to control the amine-capturing power of the cleaning liquid used in the second cleaning apparatus so as to be larger than the amine-capturing power of the cleaning liquid used in the first cleaning apparatus.

### (Fifth Embodiment)

A fifth embodiment will be described with reference to FIG. 2.

In the amine capturing system of the fifth embodiment, the controller 108 (FIG. 1) controls the temperature of the cleaning liquid used in the second cleaning apparatus so as to be lower than the temperature of the cleaning liquid used in the first cleaning apparatus. Thereby, the amine-capturing power of the cleaning liquid in the second cleaning apparatus can be controlled so as to be larger than the amine-capturing power of the cleaning liquid in the first cleaning apparatus, as in the fourth embodiment.

In the present embodiment, the amine capturing system is operated in a form of setting the temperature of the cleaning liquid in the first cleaning apparatus at approximately 40°C and the temperature of the cleaning liquid in the second cleaning apparatus at approximately 20°C. Because the combustion exhaust gas 1 usually has a temperature of approximately 40°C, the cleaning liquid in the first cleaning apparatus can be controlled to a temperature of 40°C without being heated. On the other hand, the cleaning liquid in the second cleaning apparatus can be controlled to 20°C by being cooled by a cooler 23.

The cooler 23 can increase its cooling capacity by using a chiller. In this case, the chiller is provided only in the cooler 23 among the coolers 21 to 23 to reduce the cost of the amine capturing system.

In addition, the amine capturing system of the fifth embodiment may control a circulation flow rate of the cleaning liquid used in the second cleaning apparatus so as to be larger than a circulation flow rate of the cleaning liquid used in the first cleaning apparatus, by the controller 108 (FIG. 1). Thereby, the amine-capturing power of the cleaning liquid in the second cleaning apparatus can be controlled so as to be larger than the amine-capturing power of the cleaning liquid in the first cleaning apparatus, as in the fourth embodiment. The reason is because when the circulation flow rate of the cleaning liquid is increased, the quantity of the cleaning liquid in contact with the treated gas per m³ is increased, and accordingly the amine entrained by the treated gas tends to be easily captured.

As described above, according to the present embodiment, it is possible to control the amine-capturing power of the cleaning liquid used in the second cleaning apparatus so as to be larger than the amine-capturing power of the cleaning liquid used in the first cleaning apparatus, as in the fourth embodiment.

### (Sixth Embodiment)

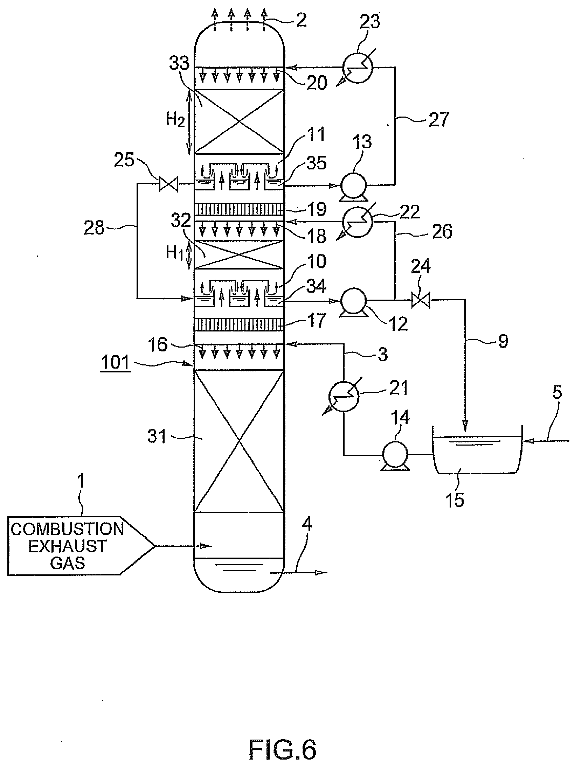

FIG. 6 is a diagram illustrating a configuration of an amine capturing system of a sixth embodiment.

In the present system, the first and the second cleaning apparatuses are structured so as to have different widths in a vertical direction of filled portions (amine capturing module) in which the treated gas comes in gas-liquid contact with the cleaning liquid. Specifically, the vertical width H₂ of the filled portion 33 of the second cleaning apparatus is set so as to be longer than the vertical width H₁ of the filled portion 32 of the first cleaning apparatus.

Thereby, the amine-capturing power of the cleaning liquid in the second cleaning apparatus can be controlled so as to be larger than that of the cleaning liquid in the first cleaning apparatus. The reason is because when the width of the vertical direction of the filled portion is increased, the quantity of the cleaning liquid which comes in contact with the treated gas per m³ is increased, as in the case in which the circulation flow rate of the cleaning liquid has been increased.

As described above, according to the present embodiment, it is possible to control the amine-capturing power of the cleaning liquid used in the second cleaning apparatus so as to be larger than that of the cleaning liquid used in the first cleaning apparatus, as in the fourth and the fifth embodiments.

While certain embodiments have been described, these embodiments have been presented by way of example only, and are not intended to limit the scope of the inventions. Indeed, the novel systems described herein may be embodied in a variety of other forms.

## Claims

1. An amine capturing system comprising:
a carbon dioxide capturing module (31) configured to bring a gas (1) containing carbon dioxide in contact with an absorbing solution (3) containing amine to cause the absorbing solution to absorb the carbon dioxide;
a first cleaning apparatus (32) configured to clean the gas (10) exhausted from the carbon dioxide capturing module (31) with a cleaning liquid to capture the amine entrained by the gas;
a second cleaning apparatus (33) configured to clean the gas (11) exhausted from the first cleaning apparatus (32) with a cleaning liquid to capture the amine entrained by the gas;
a second measuring instrument (43) configured to measure a concentration of the amine in the cleaning liquid used in the second cleaning apparatus (33);
a liquid sending mechanism configured to extract the cleaning liquid used in the second cleaning apparatus (33) and send the cleaning liquid to the first cleaning apparatus (32) when the concentration of the amine detected by the second measuring instrument (43) exceeds a predetermined value;
an absorbing solution demister (17) configured to capture mist of the absorbing solution entrained by the gas (10) exhausted from the carbon dioxide capturing module (31); and
a cleaning liquid demister (19) configured to capture mist of the cleaning liquid entrained by the gas (11) exhausted from the first cleaning apparatus (32).

2. The system of Claim 1, further comprising:
a first measuring instrument (41) configured to measure a concentration of the amine in the cleaning liquid used in the first cleaning apparatus (32); and
a mixing mechanism configured to extract the cleaning liquid used in the first cleaning apparatus (32) and mix the cleaning liquid or the amine in the cleaning liquid into the absorbing solution when the concentration of the amine detected by the first measuring instrument (41) exceeds a predetermined value.

3. The system of Claim 2, wherein
the mixing mechanism comprises a reverse osmosis membrane (51) supplied with the cleaning liquid used in the first cleaning apparatus to increase the concentration of the amine in the cleaning liquid, and
the mixing mechanism mixes the cleaning liquid concentrated by the reverse osmosis membrane into the absorbing solution

4. The system of Claim 2, wherein
the mixing mechanism comprises an ion exchange resin (61) supplied with the cleaning liquid used in the first cleaning apparatus to cause the amine in the cleaning liquid to be adsorbed to the ion exchange resin, and
the mixing mechanism causes the amine adsorbed to the ion exchange resin (61) to elute into a supernatant liquor, and mixes the supernatant liquor into the cleaning liquid.

5. The system of Claim 1, further comprising:
a controller (108) configured to control a pH of the cleaning liquid used in the second cleaning apparatus (33) so as to be lower than a pH of the cleaning liquid used in the first cleaning apparatus (32).

6. The system of Claim 1, further comprising:
a controller (108) configured to control a temperature of the cleaning liquid used in the second cleaning apparatus (33) so as to be lower than a temperature of the cleaning liquid used in the first cleaning apparatus (32).

7. The system of Claim 1, further comprising:
a controller (108) configured to control a circulation flow rate of the cleaning liquid used in the second cleaning apparatus (33) so as to be larger than a circulation flow rate of the cleaning liquid used in the first cleaning apparatus (32).

8. The system of Claim 1, further comprising:
a vertical width of a filled portion of the second cleaning apparatus (33) is longer than a vertical width of a filled portion of the first cleaning apparatus (32).

9. The system of claim 1, further comprising:
one or more cleaning apparatuses other than the first (32) and second (33) cleaning apparatus, configured to clean the gas existing between the first (32) and second (33) cleaning apparatuses with a cleaning liquid to capture the amine entrained by the gas.

10. A carbon dioxide capturing system comprising the amine capturing system of Claim 1, the carbon dioxide capturing system comprising:
an absorption tower (101) comprising the carbon dioxide capturing module (31), the first cleaning apparatus (32), the second cleaning apparatus (33), the second measuring instrument (43), the liquid sending mechanism, the absorbing solution demister (17) and the cleaning liquid demister (19), and configured to bring the gas containing the carbon dioxide in contact with the absorbing solution containing the amine to cause the absorbing solution to absorb the carbon dioxide; and
a regeneration tower (104) supplied with the absorbing solution containing the absorbed carbon dioxide from the absorption tower (101), and configured to cause the absorbing solution to release the carbon dioxide.

## Patentansprüche

1. Amin auffangendes System umfassend:
ein Kohlendioxid auffangendes Modul (31), das konfiguriert ist, um ein Gas (1), das Kohlendioxid enthält, in Kontakt mit einer absorbierenden Lösung (3) zu bringen, die Amin enthält, um die absorbierende Lösung zum Absorbieren des Kohlendioxids zu bringen,
einen ersten Reinigungsapparat (32), der konfiguriert ist, um das Gas (10), das aus dem Kohlendioxid auffangenden Modul (31) abgelassen wird, mit einer Reinigungsflüssigkeit zu reinigen, um das durch das Gas mitgerissene Amin aufzufangen;
einen zweiten Reinigungsapparat (33), der konfiguriert ist, um das Gas (11), das aus dem ersten Reinigungsapparat (32) abgelassen wird, mit einer Reinigungsflüssigkeit zu reinigen, um das durch das Gas mitgerissene Amin aufzufangen;
ein zweites Messinstrument (43), das zum Messen einer Konzentration des Amins in der Reinigungsflüssigkeit, die im zweiten Reinigungsapparat (33) verwendet wird, konfiguriert ist;
einen Flüssigkeit schickenden Mechanismus, der konfiguriert ist, um die Reinigungsflüssigkeit, die in dem zweiten Reinigungsapparat (33) verwendet wird, zu extrahieren und die Reinigungsflüssigkeit zum ersten Reinigungsapparat (32) zu schicken, wenn die Konzentration des Amin, die durch das zweite Messinstrument (43) erfasst worden ist, einen vorbestimmten Wert übersteigt;
einen Demister für die absorbierende Lösung (17), der konfiguriert ist, um Nebel der absorbierenden Lösung aufzufangen, der durch das Gas (10) mitgerissen worden ist, das aus dem Kohlendioxid auffangenden Modul (31) abgelassen wird; und
einen Demister für die Reinigungsflüssigkeit (19), der konfiguriert ist, um Nebel der Reinigungsflüssigkeit, der durch das Gas (11) mitgerissen worden ist, das aus dem ersten Reinigungsapparat (32) abgelassen wird, aufzufangen.

2. System nach Anspruch 1, ferner Folgendes umfassend:
ein erstes Messinstrument (41), das zum Messen einer Konzentration des Amins in der Reinigungsflüssigkeit, die in dem ersten Reinigungsapparat (32) verwendet wird, konfiguriert ist; und
einen Mischmechanismus, der konfiguriert ist, um die Reinigungsflüssigkeit, die in dem ersten Reinigungsapparat (32) verwendet wird, zu extrahieren und die Reinigungsflüssigkeit oder das Amin in der Reinigungsflüssigkeit in die absorbierende Lösung zu mischen, wenn die Konzentration des Amins, die durch das erste Messinstrument (41) erfasst wird, einen vorbestimmten Wert übersteigt.

3. System nach Anspruch 2, wobei
der Mischmechanismus eine Umkehrosmosemembran (51) umfasst, die mit der Reinigungsflüssigkeit beliefert wird, die im ersten Reinigungsapparat verwendet wird, um die Konzentration des Amins in der Reinigungsflüssigkeit zu erhöhen, und
der Mischmechanismus die Reinigungsflüssigkeit, die durch die Umkehrosmosemembran konzentriert worden ist, in die absorbierende Lösung mischt.

4. System nach Anspruch 2, wobei
der Mischmechanismus ein Ionenaustauschharz (61) umfasst, das mit der Reinigungsflüssigkeit beliefert wird, die in dem ersten Reinigungsapparat verwendet wird, um zu verursachen, dass das Amin in der Reinigungsflüssigkeit in das Ionenaustauschharz adsorbiert wird und
der Mischmechanismus verursacht, dass das in das Ionenaustauschharz (61) adsorbierte Amin in einen Überstand eluiert wird und der Überstand in die Reinigungsflüssigkeit gemischt wird.

5. System nach Anspruch 1, ferner Folgendes umfassend:
eine Regelvorrichtung (108), die konfiguriert ist, um einen pH-Wert der Reinigungsflüssigkeit, die in dem zweiten Reinigungsapparat (33) verwendet wird, zu regulieren, damit er niedriger ist als ein pH-Wert der Reinigungsflüssigkeit, die im ersten Reinigungsapparat (32) verwendet wird.

6. System nach Anspruch 1, ferner Folgendes umfassend:
eine Regelvorrichtung (108), die konfiguriert ist, um eine Temperatur der Reinigungsflüssigkeit, die im zweiten Reinigungsapparat (33) verwendet wird, zu regulieren, damit sie niedriger ist als eine Temperatur der Reinigungsflüssigkeit, die im ersten Reinigungsapparat (32) verwendet wird.

7. System nach Anspruch 1, ferner Folgendes umfassend:
eine Regelvorrichtung (108), die konfiguriert ist, um eine Zirkulationsströmungsrate der Reinigungsflüssigkeit, die im zweiten Reinigungsapparat (33) verwendet wird, zu regulieren, damit sie höher ist als eine Zirkulationsströmungsrate der Reinigungsflüssigkeit, die im ersten Reinigungsapparat (32) verwendet wird.

8. System nach Anspruch 1, ferner Folgendes umfassend:
eine senkrechte Breite eines gefüllten Teils des zweiten Reinigungsapparats (33), die größer ist als eine senkrechte Breite eines gefüllten Teils des ersten Reinigungsapparats (32).

9. System nach Anspruch 1, ferner Folgendes umfassend:
einen oder mehrere Reinigungsapparate, die nicht der erste (32) und zweite (33) Reinigungsapparat sind, die konfiguriert sind, um das Gas, das zwischen dem ersten (32) und dem zweiten (33) Reinigungsapparat vorliegt, mit einer Reinigungsflüssigkeit zu reinigen, um das durch das Gas mitgerissene Amin aufzufangen.

10. Kohlendioxid auffangendes System umfassend das Amin auffangende System nach Anspruch 1, wobei das Kohlendioxid auffangende System Folgendes umfasst:
einen Absorptionsturm (101) umfassend das Kohlendioxid auffangende Modul (31), den ersten Reinigungsapparat (32), den zweiten Reinigungsapparat (33), das zweite Messinstrument (43), den Flüssigkeit schickenden Mechanismus, den Demister für die absorbierende Lösung (17) und den Demister für Reinigungsflüssigkeit (19) und konfiguriert ist, um das Gas, das das Kohlendioxid enthält, in Kontakt mit der absorbierenden Lösung zu bringen, die das Amin enthält, um die absorbierende Lösung zum Absorbieren des Kohlendioxids zu bringen; und
einen Regenerierungsturm (104), der mit der absorbierenden Lösung, die das absorbierte Kohlendioxid enthält, aus dem Absorptionsturm (101) beliefert wird und konfiguriert ist, um die absorbierende Lösung dazu zu bringen, das Kohlendioxid freizusetzen.

## Revendications

1. Système de capture d'amine comprenant:
un module de capture de dioxyde de carbone (31) configuré pour porter un gaz (1) contenant du dioxyde de carbone au contact d'une solution absorbante (3) contenant une amine pour que la solution absorbante absorbe le dioxyde de carbone;
un premier appareil de nettoyage (32) configuré pour nettoyer le gaz (10) évacué du module de capture de dioxyde de carbone (31) avec un liquide de nettoyage pour capturer l'amine entraînée par le gaz;
un second appareil de nettoyage (33) configuré pour nettoyer le gaz (11) évacué du premier appareil de nettoyage (32) avec un liquide de nettoyage pour capturer l'amine entraînée par le gaz;
un second instrument de mesure (43) configuré pour mesurer une concentration de l'amine dans le liquide de nettoyage utilisé dans le second appareil de nettoyage (33);
un mécanisme d'envoi de liquide configuré pour extraire le liquide de nettoyage utilisé dans le second appareil de nettoyage (33) et envoyer le liquide de nettoyage vers le premier appareil de nettoyage (32) lorsque la concentration de l'amine détectée par le second instrument de mesure (43) dépasse une valeur prédéterminée;
un dispositif anti-buée de solution absorbante (17) configuré pour capturer la buée de la solution absorbante entraînée par le gaz (10) évacué du module de capture de dioxyde de carbone (31); et
un dispositif anti-buée de liquide de nettoyage (19) configuré pour capturer la buée du liquide de nettoyage entraînée par le gaz (11) évacué du premier appareil de nettoyage (32).

2. Système selon la revendication 1, comprenant en outre:
un premier instrument de mesure (41) configuré pour mesurer une concentration de l'amine dans le liquide de nettoyage utilisé dans le premier appareil de nettoyage (32); et
un mécanisme de mélange configuré pour extraire le liquide de nettoyage utilisé dans le premier appareil de nettoyage (32) et mélanger le liquide de nettoyage ou l'amine dans le liquide de nettoyage dans la solution absorbante lorsque la concentration de l'amine détectée par le premier instrument de mesure (41) dépasse une valeur prédéterminée.

3. Système selon la revendication 2, où
le mécanisme de mélange comprend une membrane d'osmose inverse (51) fournie avec le liquide de nettoyage utilisé dans le premier appareil de nettoyage pour élever la concentration de l'amine dans le liquide de nettoyage, et
le mécanisme de mélange mélange le liquide de nettoyage concentré par la membrane d'osmose inverse dans la solution absorbante.

4. Système selon la revendication 2, où
le mécanisme de mélange comprend une résine échangeuse d'ions (61) fournie avec le liquide de nettoyage utilisé dans le premier appareil de nettoyage pour provoquer l'adsorption de l'amine dans le liquide de nettoyage sur la résine échangeuse d'ions, et
le mécanisme de mélange provoque l'élution de l'amine adsorbée sur la résine échangeuse d'ions (61) dans une liqueur surnageante, et mélange la liqueur surnageante dans le liquide de nettoyage.

5. Système selon la revendication 1, comprenant en outre:
un dispositif de contrôle (108) configuré pour contrôler un pH du liquide de nettoyage utilisé dans le second appareil de nettoyage (33) afin d'être inférieur à un pH du liquide de nettoyage utilisé dans le premier appareil de nettoyage (32).

6. Système selon la revendication 1, comprenant en outre:
un dispositif de contrôle (108) configuré pour contrôler une température du liquide de nettoyage utilisé dans le second appareil de nettoyage (33) afin d'être inférieure à une température du liquide de nettoyage utilisé dans le premier appareil de nettoyage (32).

7. Système selon la revendication 1, comprenant en outre,
un dispositif de contrôle (108) configuré pour contrôler un débit de circulation du liquide de nettoyage utilisé dans le second appareil de nettoyage (33) afin qu'il soit supérieur à un débit de circulation du liquide de nettoyage utilisé dans le premier appareil de nettoyage (32).

8. Système selon la revendication 1, comprenant en outre:
une largeur verticale d'une portion remplie du second appareil de nettoyage (33) plus longue qu'une largeur verticale d'une portion remplie du premier appareil de nettoyage (32).

9. Système selon la revendication 1, comprenant en outre:
un ou plusieurs appareils de nettoyage autres que le premier (32) et le second (33) appareils de nettoyage, configurés pour nettoyer le gaz existant entre le premier (32) et le second (33) appareils de nettoyage avec un liquide de nettoyage pour capturer l'amine entraînée par le gaz.

10. Système de capture de dioxyde de carbone comprenant le système de capture d'amine selon la revendication 1, le système de capture de dioxyde de carbone comprenant:
une tour d'absorption (101) comprenant le module de capture de dioxyde de carbone (31), le premier appareil de nettoyage (32), le second appareil de nettoyage (33), le second instrument de mesure (43), le mécanisme d'envoi de liquide, le dispositif antibuée de solution absorbante (17) et le dispositif anti-buée de liquide de nettoyage (19), et configurée pour porter le gaz contenant le dioxyde de carbone au contact de la solution absorbante contenant l'amine pour entraîner l'absorption du dioxyde de carbone par la solution absorbante; et
une tour de régénération (104) fournie avec la solution absorbante contenant le dioxyde de carbone absorbé de la tour d'absorption (101), et configurée pour faire libérer le dioxyde de carbone par la solution absorbante.
